# EUROPÄISCHE PATENTANMELDUNG

(11) **EP 1 946 637 A1**
(43) Veröffentlichungstag der Anmeldung: **23.07.2008**
(21) Anmeldenummer: 08450004.0
(22) Anmeldetag: 22.01.2008
(51) Int. Cl.: A01N 25/00, A01N 35/06, A01N 31/06, A01P 9/00

(54) **Schneckenbekämpfungsmittel**

(30) Priorität: 22.01.2007 AT 1042007
(71) Anmelder: Fruhmann Bioenergetic Handelsgesellschaft mbH, 8412 Allerheiligen bei Widon (AT)
(72) Erfinder: Falsone, Gioacchino, 8403 Lebring (AT)
(74) Vertreter: Schwarz, Albin

(57) **Zusammenfassung**

Die Erfindung betrifft ein Schneckenbekämpfungsmittel, welches Campher zu mindestens 1 Gew.-%, bezogen auf die Masse des Schneckenbekämpfungsmittel, und einen Futterstoff für Schnecken enthält.

## Beschreibung

Die vorliegende Erfindung betrifft ein Schneckenbekämpfungsmittel.

In den letzten Jahren sind Nacktschnecken in Gärten und landwirtschaftlichen Kulturflächen zu einem immer größeren Problem geworden. Es handelt sich dabei um die Nacktschnecken Arion empiricorum, Limax maximus, Limax agrestis und Limax tenellus. Die Tiere sind in ganz Europa verbreitet und verursachen großen Schaden.

Die gängigen Schneckenbekämpfungsmittel bestehen im wesentlichen aus dem Wirkstoff (Molluskizid), einem chemisch-synthetischen Schneckengift, einem Trägermaterial, einem Bindemittel und einem Fraßstoff. Nachteilig ist dabei, dass das Mittel nicht nur von Schnecken, sondern auch von anderen Tieren (Nutztieren), z.B. Hühnern, Käfern, gefressen werden und dadurch Schaden anrichtet.

Aus der DE 41 11 389 A1 ist ein Schneckenbekämpfungsmittel bekannt, welches ein Repellent für Laufkäfer enthält, um die schädliche Wirkung des Molluskizids für Laufkäfer zu minimieren. Als derartiges Repellent wird Imidacloprid vorgeschlagen.

Ein weiteres Präparat, welches für Nutztiere unschädlich sein soll, ist aus der WO 00/04775 bekannt. Es enthält folgende Komponenten:
1) das Molluskizid (Methiocarb, Thiodicarb),
2) ein Repellent für Nutztiere, und
3) weitere Stoffe, wie. z.B. Bindemittel, Träger, Tenside.

Gemäß WO 00/04775 ist es wesentlich, dass das Repellent im Präparat keine Wirkung auf die zu bekämpfenden Weichtiere hat. Es werden Substanzen als Repellent vorgeschlagen, welche Nutztiere zwar wahrnehmen können, sie aber veranlasst, das Mittel und damit das Gift nicht aufzunehmen. Gemäß der WO 00/04775 können eine Vielzahl von Verbindungen als Repellent dienen:
a) flüchtige, bicyclische Verbindungen, u.a. Campher, Borneol, Eucalyptol, Pinen;
b) einwertige oder mehrwertige Alkohole;
c) Verbindungen mit einem substituierten, 6-gliedrigen carbocyclischem Ring, z.B. Eugenol, Limonen; und
d) nicht-flüchtige Verbindungen, wie z.B. Tetranortriteropene.

Ein gravierender Nachteil der bekannten Schneckenbekämpfungsmittel ist aber nach wie vor ihr Gehalt an chemisch-synthetischen Giften, die nicht nur nicht umweltverträglich, sondern meistens noch wasserlöslich sind und durch Regen in das Grundwasser eingewaschen werden können. Das Gift macht zudem die Handhabung des Mittels gefährlich.

Hier setzt nun die vorliegende Erfindung an und stellt sich zur Aufgabe, ein Schneckenbekämpfungsmittel zur Verfügung zu stellen, das die oben genannten Nachteil nicht aufweist und ohne weiteres im Freien eingesetzt werden kann.

Diese Aufgabe wird mit einem Schneckenbekämpfungsmittel gelöst, welches mindestens 1 Gew.-% Campher und einen Futterstoff (= Fraßstoff) für Schnecken enthält. Bevorzugt ist Campher in einem Anteil von 1-5 Gew.-% enthalten.

Die Erfindung beruht auf der Erkenntnis, dass Campher bei einer Beimengung von mindestens 1 Gew.-%, bezogen auf die Gesamtmasse des Schneckenbekämpfungsmittels, eine ausgeprägte Wirkung auf Schnecken hat: Es hat sich nämlich gezeigt, dass die Nacktschnecken im Freiland, nachdem sie das erfindungsgemäße Schneckenbekämpfungsmittel gefressen hatten, eine Verhaltungsstörung zeigten, immer schwächer wurden und an Kraft verloren, bis sie entweder das Versteck nicht mehr erreichten oder nicht mehr verlassen konnten und dort starben. Dadurch kann im erfindungsgemäßen Mittel auf das Molluskizid gänzlich verzichtet werden, was dazu führt, dass die im Stand der Technik bekannten Probleme hinsichtlich der Beeinträchtigung von Nutztieren, der schlechten Umweltverträglichkeit und der Giftigkeit beim erfindungsgemäßen Schneckenbekämpfungsmittel nicht gegeben sind.

Aus der Literatur ist lediglich bekannt, dass Campher, ein Naturstoff aus *Cinnamomum camphora* (L.), äußerlich auf der Haut unterschiedliche Wirkung zeigt, die von der Konzentration abhängig ist. So kann Campher z.B. zu lokal analgetisch, lokal-anästhetischen und antipruriginösen Rezepturen verwendet werden. Bei höherer Konzentration bringt es auf der Haut Rötung und Reizung hervor.

Als Futterstoff eignen sich insbesondere alle Sorten von Mehl, wie z.B. aus Weizen, Dinkel, Roggen, Hafer, Gerste, Hirse, Mais oder Reis.

Campher ist bevorzugt in einem Anteil von 1-30 Gew.-% enthalten.

Eine weitere bevorzugte Ausführungsform des erfindungsgemäßen Schneckenbekämpfungsmittels ist dadurch gekennzeichnet, dass es zusätzlich Menthol enthält. Es hat sich gezeigt, dass der Zusatz von Menthol die Wirkung des Camphers als Schneckenbekämpfungsmittel synergistisch verstärkt.

Statt des Menthols kann auch einer seiner Ester eingesetzt werden, wobei die OH-Gruppe des Menthols mit einer aliphatischen Säure, insbesondere Essigsäure und Propionsäure, verestert ist. Auch Derivate des Menthols, wie z.B. Menthyloxyessigsäure, könne eingesetzt werden. Für die Zwecke der vorliegenden Patentanmeldung und Patentansprüche umfasst der Begriff "Menthol" somit auch die Ester und Derivate des Menthols.

Das erfindungsgemäße Schneckenbekämpfungsmittel enthält Campher und Menthol bevorzugt zu insgesamt 1-30 Gew.-%, wobei mehr Campher als Menthol vorgesehen ist.

Campher und Menthol sind am besten im Verhältnis 8:1 bis 15:1 (Campher : Menthol) enthalten.

Es hat sich gezeigt, dass das erfindungsgemäße Schneckenbekämpfungsmittel meistens von den Schnecken vollständig aufgenommen wird.

Das erfindungsgemäße Schneckenbekämpfungsmittel ist nicht wasserlöslich und umweltfreundlich. Eine besondere Ausführungsform ist dadurch gekennzeichnet, dass sie ausschließlich aus Naturprodukten besteht.

Mit dem nachfolgenden Beispiel wird die Herstellung einer bevorzugten Ausführungsform des erfindungsgemäßen Schneckenbekämpfungsmittels beschrieben.

### Beispiel

Eine Mischung aus 9 g Campher, 1 g Menthol und 90 g Weizenmehl wurden mit 50 ml Wasser versetzt, zu einem Teig verarbeitet, zu kleinen Körnern gepresst und schließlich 24 Stunden getrocknet.

## Patentansprüche

1. Schneckenbekämpfungsmittel enthaltend Campher und einen Futterstoff für Schnecken, wobei Campher zu mindestens 1 Gew.%, bevorzugt in einem Anteil von 1-5 Gew.%, enthalten ist.

2. Schneckenbekämpfungsmittel nach Anspruch 1, **dadurch gekennzeichnet, dass** es Campher in einem Anteil von 1-30 Gew.-% enthält.

3. Schneckenbekämpfungsmittel nach einem der Ansprüche 1 oder 2, **dadurch gekennzeichnet, dass** es zusätzlich Menthol enthält.

4. Schneckenbekämpfungsmittel nach Anspruch 3, **dadurch gekennzeichnet, dass** es Campher und Menthol zu insgesamt 1-30 Gew.-% enthält, wobei mehr Campher als Menthol vorgesehen ist.

5. Schneckenbekämpfungsmittel nach einem der Ansprüche 3 oder 4, **dadurch gekennzeichnet, dass** es Campher und Menthol im Verhältnis 8:1 bis 15:1 (Campher : Menthol) enthält.
